# EUROPEAN PATENT APPLICATION

(11) **EP 2 096 543 A2**
(43) Date of publication of application: **02.09.2009**
(21) Application number: 09001159.4
(22) Date of filing: 28.01.2009
(51) Int. Cl.: G06F 11/14, G06F 11/20

(54) **Block-based storage system having recovery memory to prevent loss of data from volatile write cache**

(30) Priority: 30.01.2008 US 24573 P; 12.01.2009 US 352241
(71) Applicant: Formation, Inc., Moorestown NJ 08057-1364 (US)
(72) Inventor: Carswell, Samuel A., Moorestown, New Jersey 08057 (US); Brown, Joseph I., Lansdale, Pennsylvania 19446 (US)
(74) Representative: Marchand, André

(57) **Abstract**

A block-based storage system that maximizes data throughput while minimizing data loss has a non-volatile mass storage media for receiving and non-volatilly storing WRITE data and a volatile write cache for receiving and caching WRITE data until the WRITE data has been written to the non-volatile mass storage media. A controller includes a processor in communication with the volatile write cache for writing data to the volatile write cache and a non-volatile recovery memory in communication with the processor is supplied for receiving and non-volatilly storing a copy of all data that the processor writes to the volatile write cache so that any data cached in the volatile write cache which is lost due to a loss of power may be re-written to the volatile write cache from the recovery memory.

## Description

### CROSS-REFERENCE TO RELATED APPLICATION

This non-provisional patent application claims the benefit of U. S. Provisional Patent Application No. 61/024,573 filed January 30, 2008 and entitled "Recovery Memory for Volatile Write Cache", the entire subject matter of which is hereby incorporated herein by reference.

### BACKGROUND OF THE INVENTION

The present invention relates generally to block-based storage systems such as single disk, multiple disk array (RAID) and SAN systems. More particularly, the present invention relates to an improved block-based storage system which includes a non-volatile recovery memory for storing a copy of all data blocks which are written to a volatile write cache at least until the data blocks have been written from the volatile write cache to a non-volatile mass storage media.

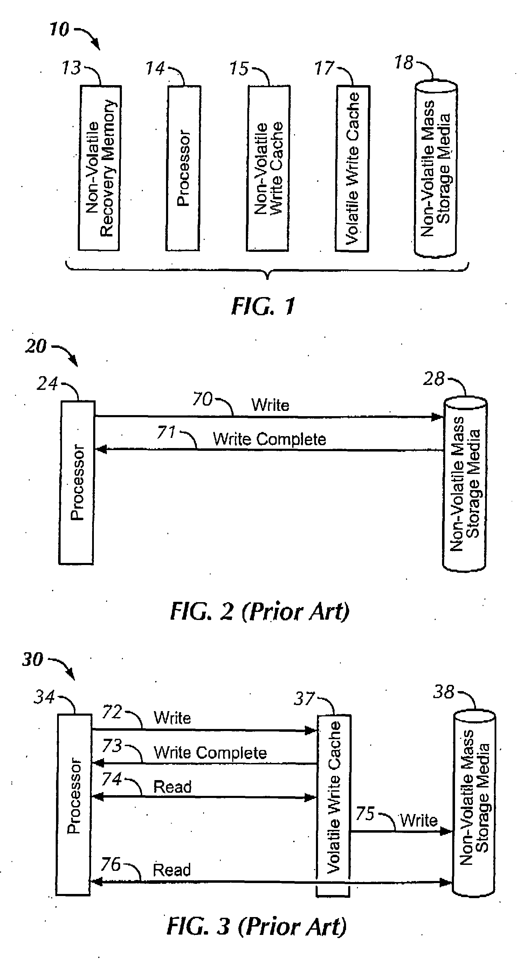

Fig. 2 is a block diagram of a typical prior art cache-less block-based storage system 20. The block-base storage system 20 includes a processor 24 as part of a controller for controlling the flow of data within the storage system 20. The storage system 20 further includes a non-volatile mass storage media 28, typically a hard disk or solid state disk. In the storage system 20 the processor 24 transfers data to the non-volatile mass storage media 28 by sending a series of commands and the data to be transferred and stored: a WRITE. The flow of WRITEs in the cache-less storage system 20 is a relatively simple two step operation as shown in Fig. 2. In the first step, the processor 24 issues a WRITE 70 to the non-volatile mass storage media 28 and when the data has been received and successfully stored in the mass storage media 28, in the second step, the mass storage media 28 returns a WRITE COMPLETE 71 to the processor 24. The cache-less storage system 20 has low data throughput since the time between the WRITE 70 and the WRITE COMPLETE 71 includes writing to the relatively slow non-volatile mass storage media 28. Data is not usually lost as a result of an unexpected power loss since the WRITE COMPLETE 71 is returned only after the data has been successfully stored to the non-volatile mass storage media 28. However, because the WRITE operation is time consuming and slows down the entire storage system 20 it is desirable to implement a faster WRITE operation.

Fig. 3 is a block diagram of a typical prior art volatile write cache block-based storage system 30. Like the above-described cache-less storage system 20 (Fig. 2), the volatile write cache storage system 30 includes a controller having a processor 34 and non-volatile mass storage media 38. However, unlike the cache-less storage system 20, the volatile cache storage system 30 includes a volatile Write Cache (WC) 37. The volatile WC 37 is short term, volatile memory, typically semiconductor memory to facilitate the relatively rapid temporary storage (cache) of block-based data (called WRITE data) from the processor 34 without significantly affecting overall storage system performance. As is well known in the art, non-volatile storage system components (such as a hard disk and flash-based disk) retain stored data when power is removed and volatile storage system components (such as a volatile write cache 37) lose all data whenever power is interrupted or otherwise removed such as when the storage system 30 is shut down.

In the volatile write cache storage system 30 shown in Fig. 3 data is stored when the processor 34 issues a WRITE 72 to the volatile WC 37 and, after receiving and storing (caching) the data, the volatile-WC 37 returns a WRITE COMPLETE 73 to the processor 34. Later, the cached data is written (WRITE 75) from the volatile WC 37 to the non-volatile mass storage media 38. The use of the volatile WC 37 greatly increases the performance of the storage system 30 in two ways: A) by using knowledge of the non-volatile mass storage media 38 to optimize the timing of the WRITEs 75 in relation to other WRITEs and READs, and B) by removing the long mass storage media WRITE 75 latency between the WRITE 72 and the WRITE COMPLETE 73. The volatile cache storage system 30 maintains strict cache coherency by marking data blocks cached in the volatile WC 37 as either "CLEAN" or "DIRTY". Newly received and cached data blocks are characterized as DIRTY until the data blocks are successfully written (WRITE 75) to the non-volatile mass storage media 38 at which point the data blocks are characterized as CLEAN. A READ 74 of DIRTY data blocks is serviced by the volatile WC 37. A READ 76 of CLEAN data blocks is serviced directly by the non-volatile mass storage media 38 (shown in Fig. 3 as passing through the volatile WC 37).

The volatile WC 37 has a financial advantage as it is supported by open source software and/or comes standard with many non-volatile mass storage media 38. Unfortunately, the use of a volatile WC 37 exposes the storage system 30 to potential unrecoverable data losses if power is interrupted or otherwise removed from the system, particularly the volatile WC 37 before the data cached in the volatile WC 37 is written to the non-volatile mass storage media 38: the hard disk or solid state disk. Traditionally such data losses may be avoided using one of the following techniques: 1) protecting the storage system and particularly the volatile WC 37 with an un-interruptible power supply; 2) graceful storage system 30 shutdown which includes writing all of the cached data from the volatile WC 37 to the non-volatile mass storage media 38; or 3) disabling and not using the volatile-WC 37 (discussed below) so that all of the data is written by the processor 34 directly to the non-volatile mass storage media 38 in the manner described above for the cache-less storage system 20.

An un-interruptible power supply or graceful system shutdown is not possible in some storage system situations resulting in disabling the volatile WC 37, and the loss of its attendant performance boost, as the only viable technique which may be used to avoid such potential data loss.

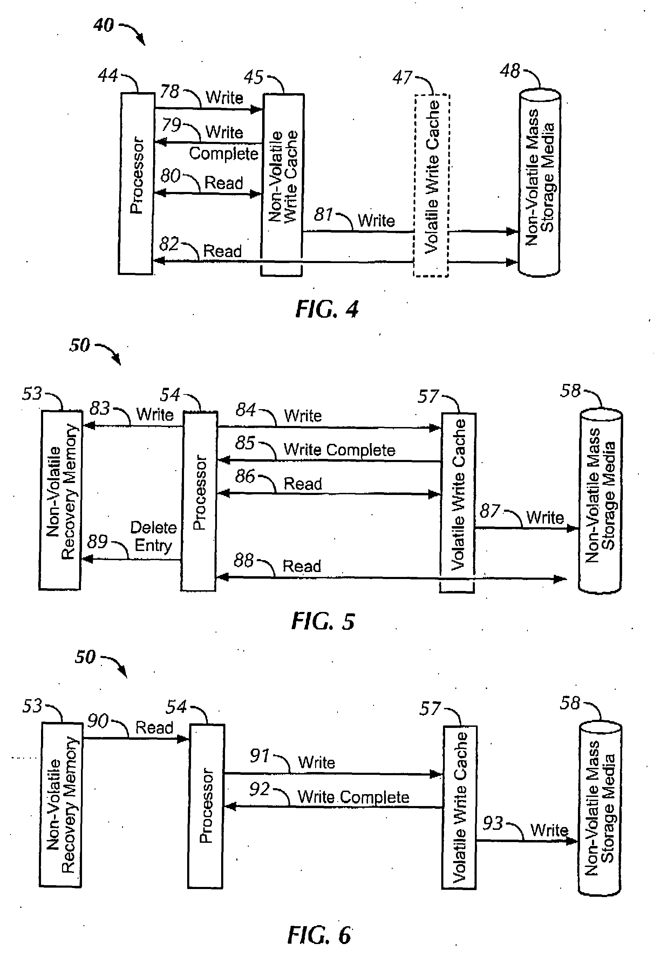

Fig. 4 is a block diagram of a prior art non-volatile write cache block-based storage system 40. Like the above-described volatile write cache storage system 30 (Fig. 3), the non-volatile write cache storage system 40 includes a controller having a processor 44, non-volatile mass storage media 48 and a volatile WC 47. However, unlike the storage system 30 shown in Fig. 3, the controller of the storage system 40 also includes an integrated non-volatile write cache (WC) 45 and the volatile WC 47 has been disabled to be non-functioning (shown with dashed lines in Fig. 4). In the non-volatile write cache storage system 40 data is stored when the processor 44 issues a WRITE 78 to the non-volatile WC 45 and, after the data has been received and cached, the non-volatile WC 45 returns a WRITE COMPLETE 79 to the processor 44. Later, the cached data in the non-volatile WC 45 is written (WRITE 81) directly to the non-volatile mass storage media 48 (shown in Fig. 4 as passing through the disabled volatile WC 47). The non-volatile WC 45 caches WRITE data from the processor 44 until the data has been successfully written to the non-volatile mass storage media 48. The use of the non-volatile WC 45 increases system performance by removing long media WRITE 81 times from between the WRITE 78 and the WRITE COMPLTE 79. The performance of the storage system 40 may be less than that of the storage system 30 of Fig. 3 since the volatile WC 47 must be disabled in order to avoid data loss on power interruption. Data coherency is implemented by marking data blocks in the non-volatile WC 45 as CLEAN or DIRTY. New WRITE 78 data blocks are considered DIRTY until the data blocks are successfully written by WRITE 81 directly to the non-volatile mass storage media 48. A READ 80 of DIRTY data blocks is serviced by the non-volatile WC 45. A READ 82 of CLEAN data blocks is serviced by the non-volatile mass storage media 48 (shown in Fig 4 as passing through the disabled volatile WC 47 and through the non-volatile WC 45). In the storage system 40, data is not lost after an unexpected power loss or power interruption since the data is either cached in the non-volatile WC 45 or is stored in the non-volatile mass storage media 48. Non-volatile-WC algorithms assure data integrity by disabling the volatile-WC 47 and using complex proprietary software to maintain strict cache coherency between the non-volatilc-WC 45 and the non-volatile mass storage media 48.

The present invention takes advantage of the readily available volatile write cache software and hardware used in storage system 30 while delivering the power interruption tolerance of storage system 40 without its inherent non-volatile write cache cost and complexity. In a storage system 50 in accordance with the present invention the volatile write cache 57 is not disabled thereby maximizing data throughput. However, a copy of all of the data written to the volatile write cache 57 is also written to a non-volatile recovery memory 53 where the data is maintained at least until the cached data in the volatile write cache 57 has been successfully written to the non-volatile mass storage media 58. Unlike in the above described prior art storage systems 20, 30 and 40, the non-volatile recovery memory 53 maintains good system performance while preventing the loss of any data as a result of any unexpected loss or other interruption of power to the storage system 50.

### BRIEF SUMMARY OF THE INVENTION

Briefly stated, in one embodiment, the present invention comprises an improved block-based storage system that maximizes data throughput while requiring no time for graceful shutdown without data loss. The storage system has non-volatile mass storage media for receiving and storing data and a volatile write cache (WC) in communication with the non-volatile mass storage media for receiving and caching WRITE data until the WRITE data is written to the non-volatile mass storage media. The storage system also includes a controller including a processor in communication with the volatile WC for writing data to the volatile write cache using a WRITE command. The improvement comprises a non-volatile recovery memory in communication with the processor for receiving from the processor and non-volatilly storing a copy of all data that the processor writes to the volatile WC so that any data cached in the volatile WC which is lost due to intentional immediate shutdown, power interruption or some other cause may be re-written by the processor to the volatile WC from the recovery memory.

In another embodiment the present invention comprises a method of operating a block-based storage system having a non-volatile mass storage media for receiving and non-volatilly storing WRITE data and a volatile write cache in communication with the non-volatile mass storage media for receiving and caching WRITE data until the WRITE data is written to the non-volatile mass storage media. The storage system also includes a controller including a processor in communication with the volatile write cache using a WRITE command and a non-volatile recovery memory in communication with the processor for receiving from the processor and non-volatilly storing a copy of all data that the processor writes to the volatile WC so that any data cached in the volatile WC and which is lost due to power interruption or some other cause may be re-written by the processor to the volatile WC from the recovery memory. The method comprising the steps of: the processor sending the same WRITE command to the volatile WC and to the recovery memory; the recovery memory receiving and storing the WRITE data; and the volatile WC receiving and storing the WRITE data until the cached WRITE data is written to the non-volatile mass storage media.

### BRIEF DESCRIPTION OF THE SEVERAL VIEWS OF THE DRAWINGS

The foregoing summary, as well as the following detailed description of preferred embodiments of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown.

In the drawing:

Fig. 1 is a hardware block diagram depicting hardware elements included in the subsequent figures;

Fig. 2 is a schematic block diagram of a block-based storage system in which data flow is between a processor and a non-volatile mass storage media in accordance with the prior art;

Fig. 3 is a schematic block diagram of a block-based storage system similar to the storage system of Fig. 2 but with the inclusion of a volatile write cache which is added to the non-volatile mass storage media in accordance with the prior art;

Fig. 4 is a schematic block diagram of a block-based storage system similar to the storage system of Fig. 3 but with the inclusion of a non-volatile write cache positioned between the processor and the non-volatile mass storage media in accordance with the prior art;

Fig. 5 is a schematic block diagram of a block-based storage system similar to the storage system of Fig. 3 which employs a non-volatile recovery memory in accordance with a first embodiment of the present invention; and

Fig. 6 is a schematic block diagram of the storage system of Fig.5 illustrating the use of the recovery memory for recovering data which is lost from the volatile write cache.

### DETAILED DESCRIPTION OF THE INVENTION

Certain terminology is used in the following description for convenience only and is not limiting. The words "right", "left", "lower" and "upper" designate directions in the drawings to which reference is made. The words "inwardly" and "outwardly" refer to directions toward and away from, respectively, the geometric center of the storage system in accordance with the present invention, and designated parts thereof. Unless specifically set forth herein, the terms "a", "an" and "the" are not limited to one element but instead should be read as meaning "at least one". The terminology includes the words noted above, derivatives thereof and words of similar import.

Complete design details for preferred embodiments of the present invention are presented below. To clearly contrast the differences between the present invention and the three prior art storage systems (cache-less 20, volatile-Write Cache (WC) 30, and non-volatile-WC 40) described in the Background section above, the present invention will be described with reference to the same or similar system components. Fig. 1 depicts the basic hardware components used by the various block-based storage systems shown in the figures. As shown in Fig. 1, the general block-based storage system 10 includes a processor 14 of a type well known in the art as part of a standard controller for operating on and transferring data. There can also be a non-volatile recovery memory 13 or a non-volatile write cache 15 each of which functions to non-volatilly store data received from the processor 14. Non-volatile mass storage media 18 such as a hard disk or flash memory is provided for more permanently storing received data and there can also be a volatile write cache 17 such as semiconductor memory, for temporarily storing (caching) data received from the processor 14. The non-volatile components retain stored data when power is removed and the volatile components lose all data when power is removed or otherwise interrupted. In each case the processor 14 transfers data to a storage component by sending a series of commands and data: called a WRITE. The processor 14 and the storage system user is promised that the data transferred by the processor 14 is in non-volatile storage upon the receipt of a WRITE COMPLETE; however, as discussed above in the Background section, how well that promise is kept varies markedly between the three prior art storage systems 20, 30 and 40 and a storage system in accordance with the below disclosed embodiment of the present invention.

Fig. 5 is a block diagram of a block-based storage system 50 which includes a recovery memory 53 for permitting the recovery of any data which is lost from the volatile WC 57 in accordance with a preferred embodiment of the present invention. Like the above-described volatile write cache storage system 30 (Fig. 3), the storage system 50 includes a processor 54, preferably as part of a standard controller, non-volatile mass storage media 58 and a volatile write cache (WC) 57. However, unlike the storage system 30 shown in Fig. 3, the storage system 50 also includes a non-volatile recovery memory 53. The recovery memory 53 could be flash memory located with the processor 54 as part of the controller or any other suitable non-volatile memory such as a solid state disk. Alternatively, the recovery memory 53 could be positioned at some other location outside of the controller. In the storage system 50, data is stored when the processor 54 issues a WRITE 84 to the volatile-WC 57 and concurrently issues an identical WRITE 83 to the non-volatile recovery memory 53. The volatile-WC 57 returns a WRITE COMPLETE 85 as soon as the data has been received and cached within the volatile WC 57. Later, data cached in the volatile-WC 57 is written (WRITE 87) to the non-volatile media 58 for more permanent storage in the same manner as described above in connection with storage system 30 and as shown in Fig. 3. The recovery memory 53 while continuing to store the received data, does not maintain strict WC coherency. A READ 86 of DIRTY data blocks is serviced by the volatile WC 57. A READ 88 of CLEAN data blocks is serviced by the non-volatile mass storage media 58 (shown in Fig. 5 as passing through the volatile WC 57). Unlike the non-volatile WC 45 of storage system 40 shown in Fig. 4, the recovery memory 53 need never be read during normal operation of the storage system 50. The recovery memory 53 contains an approximate mirror of the contents of the volatile WC 57 using an inference algorithm that is sufficient to assure that the recovery memory 53 at least contains the DIRTY data blocks cached in the volatile WC 57. Two inference algorithms, disclosed in greater detail below, are imprecise and will likely leave at least some data blocks in the recovery memory 53 that have been superseded or already written to the non-volatile mass storage media 58. However, the addition of the recovery memory 53 to the prior art storage system 30 of Fig. 3 creates a storage system 50 that prevents permanent data loss after the loss of all data stored in the volatile WC 57 due to an intentional fast shutdown or unexpected power loss.

Fig. 6 shows how lost WC 57 data is recovered and restored. The recovery memory 53 minimally contains all data blocks that have not have been written to the non-volatile mass storage media 58. After power is restored, all data stored in the non-volatile recovery memory 53 is read by the processor 54 (READ 90) and is thereafter written (WRITE 91) to the volatile WC 57. The volatile WC 57 returns a WRITE COMPLETE 92 to the processor 54 and the data from the volatile WC 57 is later written to the non-volatile mass storage media 58 using the traditional WRITE 93 as described above. The same data is retained in the recovery memory 53 in case there is another interruption.

While it is desirable to store in the recovery memory 53 a complete copy of all data written to the volatile WC 57, to continue to indefinitely store all such data in the recovery memory 53 is impractical. Thus, while the purpose of the recovery memory 53 is to retain all data at least until the data has been successfully written to the non-volatile mass storage media 58, after the data has been successfully stored in the non-volatile mass storage media 58 there is no longer a need to retain the same data in the recovery memory 53. Two techniques are disclosed below which exploit the fact that there are indirect methods of inferring that the non-volatile mass storage media 58 has stored WRITE data. Using one of the disclosed techniques, or some other technique known to those skilled in the art, data integrity may be maintained while leaving the volatile WC 57 enabled.

With the first technique for inferring when data or writes can be deleted, the recovery memory 53 is implemented as a first in/first out (FIFO) for sequential storage of all WRITE data from the processor 54. Periodically during operation of the storage system 50, the processor 54 issues a FLUSH WC command to the volatile WC 57. The volatile WC 57 then writes all DIRTY data blocks cached in the volatile WC 57 to the non-volatile mass storage media 58. When all of the data cached in the volatile WC 57 has been successfully stored in the non-volatile mass storage media 58, a FLUSH WC acknowledgement is returned to the processor 54. Concurrently, the processor 54 could have been sending more WRITEs to the recovery memory 53 and to the volatile WC 57. Upon receipt of the of the FLUSH WC acknowledgement, the processor 54 can send a Delete Entry command 89 to purge or delete from the recovery memory 53 (FIFO) all writes that were issued to the recovery memory 53 before the issuance of the FLUSH WC command. Although flushing the volatile WC 57 in this manner will temporarily reduce the performance of the storage system 50, the flush command is used only rarely (e.g. once every two minutes) and the slight loss of performance is a small penalty to pay to avoid any loss of data and for the subsequent performance boost realized by leaving the volatile-WC 57 enabled.

The second technique uses priori knowledge of the volatile-WC state machine for inferring when data or writes can be deleted from the recovery memory 53. For example, some such state machines will move a DIRTY data block from the volatile-WC 57 to the non-volatile mass storage media 58 no later than after a computable number of WRITES, typically before accepting unique WRITE data totaling twice the size of the volatile-WC 57. Using this knowledge, a controller algorithm is implemented that stores WRITE data in the non-volatile recovery memory 53, tracks the running accumulated size of unique WRITE blocks sent to the volatile WC 57 and deletes the corresponding data block entry from the recovery memory 53 once the bytes of written data is greater than twice the size of the volatile WC 57. To assure that no data is lost due to a power outage or interruption, after power restoration all WRITE data stored in the recovery memory 53 is re-sent to the volatile WC 57. Unlike existing algorithms, the second technique is not precise and may re-write to the volatile WC 57 at least some WRITEs already successfully written to the non-volatile mass storage media 57. The time it takes to write such excess WRITEs at a start up of the storage system.50 is a small penalty to pay to avoid the loss of any data and for the subsequent performance boost realized by leaving the volatile-WC 57 enabled.

It will be appreciated by those skilled in the art that changes could be made to the embodiment described above without departing from the broad inventive concepts thereof. It is understood, therefore, that this invention is not limited to the particular embodiment disclosed, but it is intended to cover modifications within the spirit and scope of the present invention as defined by the appended claims.

## Claims

1. An improved block-based storage system that maximizes data throughput while minimizing potential data loss, the storage system having:
a non-volatile mass storage media for receiving and non-volatilly storing WRITE data;
a volatile write cache in communication with the non-volatile mass storage media for receiving and caching WRITE data until the WRITE data is written to the non-volatile mass storage media; and
a controller including a processor in communication with the volatile write cache for writing data to the volatile write cache using a WRITE command,
wherein the improvement comprises a non-volatile recovery memory in communication with the processor for receiving from the processor and non-volatilly storing a copy of all data that the processor writes to the volatile write cache so that any data cached in the volatile write cache which is lost due to a power interruption or some other cause may be re-written by the processor to the volatile write cache from the recovery memory.

2. The improved storage system as recited in claim 1 wherein the recovery memory is of the first in first out (FIFO) type.

3. The improved storage system as recited in claim 1 wherein the recovery memory is located within the controller.

4. The improved storage system as recited in claim 1 wherein the recovery memory is not located within the controller.

5. The improved storage system as recited in claim 1 wherein the recovery memory comprises one of a solid state disk and flash memory.

6. The improved storage system as recited in claim 1 wherein after restoration of system power, all WRITE data stored in the recovery memory is re-written to the volatile write cache.

7. The improved storage system as recited in claim 6 wherein the data stored in the recovery memory is re-written to the volatile write cache during start up of the storage system.

8. The improved storage system as recited in claim 1 wherein the recovery memory is periodically purged to remove data which has been stored in the non-volatile mass storage media.

9. A method of operating a block-based storage system having:
a non-volatile mass storage media for receiving and non-volatilly storing WRITE data;
a volatile write cache in communication with the non-volatile mass storage media for receiving and caching WRITE data until the WRITE data is written to the non-volatile mass storage media;
a controller including a processor in communication with the volatile write cache for writing data to the volatile write cache using a WRITE command; and
a non-volatile recovery memory in communication with the processor for receiving from the processor and non-volatilly storing a copy of all data that the processor writes to the volatile write cache so that any data cached in the volatile write cache which is lost due to a power interruption or some other cause may be re-written by the processor to the volatile write cache from the recovery memory,
the method comprising the steps of:
the processor sending the same WRITE command to the volatile write cache and to the recovery memory;
the volatile write cache receiving and storing the WRITE data until the cached WRITE data is written to the non-volatile mass storage media; and
the recovery memory receiving and storing the WRITE data.

10. The method as recited in claim 9 further comprising the steps of:
the processor periodically issues a flush write cache command which causes the volatile write cache to write all cached data to the mass storage media and returns to the processor a flush acknowledgment signal; and
the processor, after receiving the flush acknowledgment signal from the volatile write cache, issues a delete entry command to the recovery memory to delete all stored data written to the recovery memory before the issuance of the flush write cache command.

11. The method as recited in claim 9 further including the step of:
upon restoration of power after a power outage or interruption to the storage system the processor reading the data stored in the non-volatile recovery memory and writing the read data to the volatile write cache.

12. The method as recited in claim 11 wherein the processor reads the data stored in the recovery memory and writes the read data to the volatile write cache during start up of the storage system.
